# EUROPÄISCHE PATENTSCHRIFT

(11) **EP 1 207 130 B1**
(45) Veröffentlichungstag und Bekanntmachung des Hinweises auf die Patenterteilung: **03.08.2005**
(21) Anmeldenummer: 01103031.9
(22) Anmeldetag: 08.02.2001
(51) Int. Cl.: B66D 1/50, B66D 1/16

(54) **Hubeinrichtung mit Auffahrschutz**
Lifting device with collision protection
Appareil de levage avec protection contre les collisions

(30) Priorität: 10.02.2000 DE 10005411
(43) Veröffentlichungstag der Anmeldung: 22.05.2002
(73) Patentinhaber: Perabo, Klaus, 65375 Oestrich-Winkel (DE)
(72) Erfinder: Perabo, Klaus, 65375 Oestrich-Winkel (DE)
(74) Vertreter: Rüger, Barthelt & Abel Patentanwälte

(56) Entgegenhaltungen:
- EP-A- 0 869 099
- NL-C- 66 877
- US-A- 4 234 167
- US-A- 4 328 954
- US-A- 5 660 373

## Beschreibung

Gegenstand der vorliegenden Erfindung ist eine Hubeinrichtung, die zum Heben und Senken von Lasten geeignet ist, und insbesondere eine Hubeinrichtung, die bei automatischen Entnahmegeräten bspw. bei Regallagersystemen oder in der Fördertechnik eingesetzt werden kann.

Solche Hubeinrichtungen sind von einem Stellmotor angetrieben, dessen Drehzahl gesteuert oder geregelt werden kann, um definierte vertikale Lastbewegungen zu ermöglichen. Der Motor ist über ein Getriebe mit der Last verbunden. Beim Heben der Last wird auf das Getriebe ein Drehmoment eingeleitet, das die Last hebt. Das Absenken der Last wird durch das Gewicht der Last selbst bewirkt, dem ein Drehmoment des Motors bremsend entgegenwirkt.

Ein an dem Motor vorhandener Winkel- oder Drehgeber dient zur Erfassung der Position der Last. Der Drehwinkel ist proportional zu dem vertikalen Weg der Last. Es muss deshalb eine feste Zuordnung zwischen der Drehposition des Motors und der Getriebeeingangswelle beibehalten werden.

Kollidiert die Last beim Absenken mit einem Hindernis, wird sie dadurch abrupt abgebremst. Der bislang im Generatorbetrieb bremsend betriebene Motor läuft motorisch und mit Schwung weiter und dabei in das blockierte Getriebe hinein. Dies kann zu Getriebeschäden führen.

Aus der EP 0 869 099 A2 ist eine Hubeinrichtung für einen Kran bekannt, die eine Seiltrommel mit einem Seil zum Heben einer Last, einen Motor mit einem untersetzenden Getriebe zum Drehen der Seiltrommel, um das Seil auf- oder abzuwickeln, sowie eine Kupplungseinrichtung mit zwei Klauenkupplungsgliedern aufweist, die im normalen Betrieb durch eine Feder gegeneinander vorgespannt sind, um den Motor mit der Seiltrommel antriebsmäßig zu verbinden. Durch eine Axialbewegung eines der Klauenkupplungsglieder können diese außer Eingriff gebracht werden, um zu ermöglichen, dass sich die Seiltrommel unabhängig von dem Motor allein unter dem Einfluss der Schwerkraft der sinkenden Last frei dreht. Eine Bremseinrichtung ist dazu vorgesehen, die Drehbewegung der Seiltrommel zu verlangsamen, anzuhalten oder zu verhindern.

Davon ausgehend ist es eine Aufgabe der vorliegenden Erfindung, eine betriebssichere Hubeinrichtung mit einem Auffahr- oder Kollisionsschutz zu schaffen.

Diese Aufgabe wird mit einer Hubeinrichtung mit den Merkmalen des Patentanspruches 1 gelöst.

Die erfindungsgemäße Hubeinrichtung weist eine durch Steuersignale steuerbare oder regelbare Antriebs- und Bremseinrichtung (Motor) als Antriebsquelle für die Hubeinrichtung, ein Getriebe mit einer Eingangswelle, einem lastseitigen Abtrieb und einer zwischen diesen vorhandenen untersetzenden Antriebsverbindung, eine in dem Antriebsstrang zwischen dem Motor und der Last angeordnete lösbare Kupplungseinrichtung sowie eine Vorspanneinrichtung auf, die dazu dient, die Kupplungseinrichtung in einer vorgegebenen Drehrichtung vorzuspannen.

An der Kupplungseinrichtung ist ein Drehspiel mit wenigstens einem Anschlag vorgesehen, wobei die Kupplung sowohl beim Heben als auch beim Absenken an diesem einen Anschlag in Eingriff steht. Im Kollisionsfall, z.B. beim Aufsetzen der Last auf ein Hindernis, dreht sich die Drehmomentübertragungsrichtung an der Kupplung um und die Kupplung hebt von dem Anschlag ab. Das Spiel ist wenigstens so groß, dass der Motor gestoppt werden kann, bevor die Kupplung ihren anderen Anschlag erreicht. Das Getriebe wird dadurch von dem Motor abgetrennt. Dreht der gewissermaßen ins Leere gelaufene Motor um, um die Last von dem Hindernis abzuheben, ist die Drehverbindung zwischen Motor und Getriebe wieder hergestellt, wenn die Kupplung an dem zur Lastübertragung dienenden Anschlag in Anlage kommt. Die Winkelzuordnung zwischen Motor und Getriebe stimmt mit der ursprünglichen Zuordnung überein; somit gibt der Winkel- oder Drehgeber des Motors wieder gültige, die Lastposition kennzeichnende Signale ab. Eine Neukalibrierung ist nicht erforderlich, wie es erforderlich wäre, wenn Motor und Getriebe getrennt und in anderer Relativ-Drehposition wieder verbunden würden.

Während im störungsfreien Betrieb eine formschlüssige Verbindung für den Kraftfluss zwischen der Antriebs- und Bremseinrichtung und dem Getriebe durch die Vorspanneinrichtung sichergestellt ist, ermöglicht das Drehspiel im Kollisionsfall beim Absenken der Last ein Weiterdrehen der Antriebs- und Bremseinrichtung für eine gewisse Zeit. Dies, obwohl die Getriebeeingangswelle an einer Weiterdrehung gehindert, d.h. blockiert ist. Durch automatisches Auskuppeln, ohne Schaltoperationen und ohne Zeitverzögerung, wird das Getriebe unverzüglich von der Antriebsquelle getrennt, und eine Rückwirkung von der Last auf die Antriebsquelle unterbleibt.

Das Drehspiel schützt den Motor und das Getriebe vor Überlastung und Beschädigung und erhöht die Betriebssicherheit. Durch geeignete Sensoren kann das Auskuppeln der Kupplungseinrichtung erfasst und zu einer Steuereinheit gemeldet werden, um den Motor augenblicklich anzuhalten.

Die erfindungsgemäße Hubeinrichtung, die in der Praxis auch als "Hubachse" bezeichnet wird, ist zum Heben und Senken von Lasten bestimmt. Sie kann bspw. bei Geräten zur automatischen Entnahme, in Regallager- und Transportsystemen oder dgl. verwendet werden, wobei zu diesem Zweck auf der Abtriebsseite des Getriebes ein zweckmäßiger ansteuerbarer Greifer vorgesehen werden kann. Außerdem sind auch weitere Anwendungen, bspw. für Aufzüge, möglich.

Die Antriebs- und Bremseinrichtung kann einen Motor, bspw. einen Wechselstrom- oder Drehstrommotor enthalten, der auch von der Hubachse entfernt angeordnet und bspw. über ein zweckmäßiges Getriebe angebunden sein kann. Der Motor liefert die Antriebsleistung, um die Last zu heben. Beim Senken der Last wirkt der Motor als Generator und liefert ein Bremsmoment, das dem von der Last herrührenden Drehmoment entgegen wirkt.

Das Drehspiel ist größer bemessen, als der Anhalteweg der mit Bremssignalen beaufschlagten Antriebs- und Bremseinrichtung. Die zum Erfassen des Kollisionsfalls notwendige Zeit und die Reaktionszeit sollten möglichst mit berücksichtigt werden. Bei geringen Absenkgeschwindigkeiten kann ein Drehspiel von 180° oder wenigstens 360° ausreichend sein. Im Allgemeinen werden jedoch mehrere Umdrehungen, bspw. wenigstens drei oder vier Umdrehungen als Drehspiel für die Kupplung vorgesehen.

Das Drehspiel kann in beiden Drehrichtungen begrenzt sein. Dies stellt sicher, dass ein Absolutweg-Messsystem, das den Weg der Last bspw. in Abhängigkeit von der Motordrehung ermittelt, auch nach dem Auskuppeln und Wiedereinkuppeln die richtige Position der Last erfasst. Bei Anwendungen mit hohen Absenkgeschwindigkeiten oder speziellen Anforderungen an die Betriebssicherheit kann das Drehspiel in einer Drehrichtung auch offen ausgebildet sein (nur ein Anschlag).

Die Vorspanneinrichtung zur Vorspannung der Kupplung in einer gewählten Drehrichtung kann durch die Last selbst gebildet sein, wenn das Getriebe nicht selbsthemmend ausgebildet ist. Die Last spannt die Kupplung im Hebe- und Senkbetrieb geeignet vor. Erforderlichenfalls können alternativ oder zusätzlich andere Vorspannmittel, bspw. Federmittel, Wirbelstromantriebe oder ähnliches eingesetzt werden.

Die Kupplungseinrichtung ist vorzugsweise zwischen der Antriebs- und Bremseinrichtung und der Getriebeeingangswelle angeordnet und verbindet beide antriebsmäßig miteinander. Eine Anordnung am Getriebeausgang ist jedoch auch möglich. Die Kupplungseinrichtung besteht vorzugsweise aus zwei Kupplungshälften. Die erste Kupplungshälfte ist mit der Antriebs- und Bremseinrichtung und die zweite Kupplungshälfte mit der Eingangswelle des Getriebes drehfest verbunden.

Vorzugsweise sind die Kupplungshälften als Klauenkupplungshälften ausgebildet, die gemeinsam eine Klauenkupplung bilden. Auf einer der Kupplungshälften kann ein Stift oder ein erster Vorsprung vorgesehen sein, der mit einer zugehörigen Klaue oder einem Vorsprung auf der anderen Kupplungshälfte zur Drehmomentübertragung über geeignet ausgebildete Anlageflächen in Eingriff steht. Gegebenenfalls können an den Klauen oder der Kupplungseinrichtung geeignete Haft- oder Rastmittel, bspw. ein Kugelrastmechanismus, Klammern, Permanentmagnete oder dergleichen, vorgesehen werden, die im Betriebsfall ein zusätzliches Rastmoment erzeugen. Das Rastmoment neigt dazu, die Kupplungshälften auf der Seite des Spiels gegeneinander zu fixieren, an der die Klauen bei normaler Drehmomentübertragung in Eingriff stehen. Das Rastmoment ist derart bemessen, dass es überwunden werden kann, ohne dass das Getriebe dabei Schaden nimmt. Es können auch mehrere, bspw. zwei solche Klauenpaare zur formschlüssigen Verbindung vorgesehen sein. Dann können Seitenkräfte vermieden werden.

Bei einer vorteilhaften Ausgestaltung der Kupplungseinrichtung ist wenigstens eine der Kupplungshälften axial veschiebbar angeordnet. Durch eine solche Verschiebung kann ein Ausrücken der Kupplung zur Erzielung des gewünschten Drehspiels bewerkstelligt werden. Die Axialverschiebung kann durch eine Betätigungseinrichtung bewirkt werden, die auf wenigstens eine der Kupplungshälften einwirken kann, um sie ein- bzw. auszukuppeln. Bei Drehmomentumkehr infolge des Ausbleibens des Gegenmomentes kuppelt die Betätigungseinrichtung die Kupplungseinrichtung sicher für eine festgelegte Dauer oder dauerhaft aus.

Vorteilhafterweise erfasst und speichert die Betätigungseinrichtung den Differenzdrehwinkel zwischen den Kupplungshälften beim Auskuppeln mechanisch. Beim Wiedereinkuppeln kann der Differenzdrehwinkel im umgekehrten Sinne durchlaufen werden, so dass die von dem Absolutweg-Messsystem ermittelte Lastposition durch die zwischenzeitige Kollision nicht verfälscht wird.

In einer bevorzugten Ausgestaltung der Erfindung ist die Betätigungseinrichtung als ein Getriebe, bspw. ein Gewinde oder eine Kurve ausgebildet. Deren Steigung oder Ganghöhe kann beliebig gewählt werden und muss nicht über die gesamte Erstreckung konstant sein. Bspw. kann die Ganghöhe wenigstens in dem beim Auskuppeln zunächst wirksamen Abschnitt größer sein als die axiale Ausdehnung der Formschlusswirkflächen der einander zugeordneten Stifte und Klauen bzw. Vorsprünge der Klauenkupplung. Nach Durchlaufen einer Drehwinkeldifferenz von 360° kommen die Klauenpaare dann nicht mehr miteinander in Eingriff.

Als Kupplungseinrichtung kann auch eine Anzahl hintereinander angeordneter Kupplungsscheiben verwendet werden, die mit Vorsprüngen zur formschlüssigen Verbindung versehen sind. Die Drehspiele der einzelnen so gebildeten Einzelkupplungen addieren sich zu einem Wert, der vorzugsweise größer als 360° ist. Je nach Anzahl solcher Scheiben können Drehspiele unterschiedlicher Größe und ein Auskuppeln ohne Axialspiel realisiert werden.

Zum Erfassen der Trennung der beiden Kupplungshälften ist bei der erfindungsgemäßen Hubachse eine Sensoreinrichtung vorgesehen. Die Erfassung kann direkt, d.h. durch Feststellen eines Verlustes der Anlage zwischen den Klauenkupplungshälften, oder mittelbar vorgenommen werden. Als Kriterium kann bspw. die axiale Verschiebung wenigstens einer der Kupplungshälften herangezogen werden. Die Sensoreinrichtung sendet im Kollisionsfall entsprechende Steuersignale an eine Steuereinheit aus, die daraufhin die Antriebs- und Bremseinrichtung anhält.

Weitere vorteilhafte Einzelheiten von Ausführungsformen der Erfindung ergeben sich aus Unteransprüchen, der Zeichnung sowie der zugehörigen Beschreibung.

In der Zeichnung ist ein Ausführungsbeispiel des Gegenstandes der Erfindung dargestellt. Es zeigen:
- Fig. 1: eine Prinzipskizze, die den generellen Aufbau einer erfindungsgemäßen Hubachse verdeutlicht,
- Fig. 2: eine erste Ausführungsform der Hubachse nach Figur 1, in vereinfachter Darstellung, in Seitenansicht,
- Fig. 3: eine zweite Ausführungsform der Hubachse nach Figur 1, im eingekuppelten Zustand, in vereinfachter, teilweise längs geschnittener Darstellung, in Seitenansicht,
- Fig. 4: die Seitenansicht der Hubachse nach Figur 3, im ausgekuppelten Zustand, in vereinfachter, teilweise längs geschnittener Darstellung,
- Fig. 5a-d: Details einer in der Hubachse nach Figur 3 und 4 verwendeten Kupplungseinrichtung, mit der Draufsicht und der Seitenansicht der zu der Kupplungseinrichtung gehörenden Kupplungshälften, und
- Fig. 6a,b: eine weitere Ausführungsform einer erfindungsgemäßen Kupplungseinrichtung, in einer vereinfachten Darstellung, in der Perspektive und in Seitenansicht.

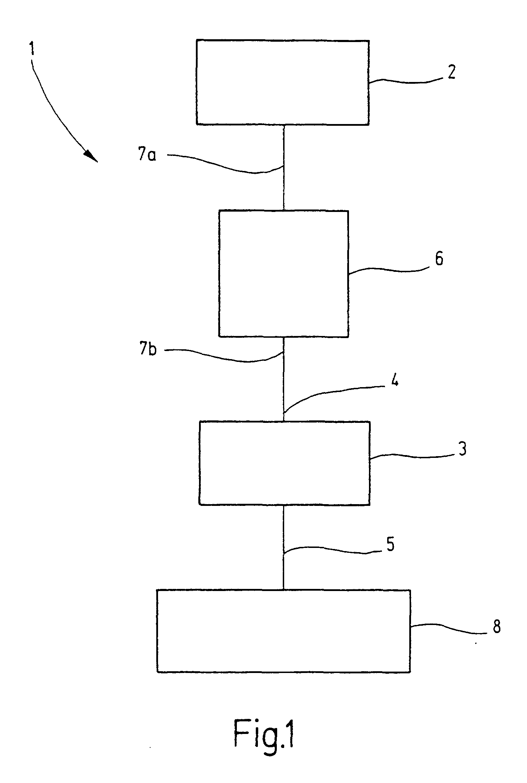

In Fig. 1 ist eine Prinzipdarstellung gegeben, die die Grundstruktur der erfindungsgemäßen Hubachse 1 veranschaulichen soll. Zu dieser gehört eine Antriebs- und Bremseinrichtung 2 für die Hubachse 1, ein Getriebe 3 mit einer Eingangswelle 4 und einem lastseitigen Abtrieb 5 sowie eine Kupplungseinrichtung 6, die im vorliegenden Fall im Übertragungsweg 7a, 7b zwischen dem Getriebe 3 und der Antriebs- und Bremseinrichtung 2 angeordnet ist, um diese antriebsmäßig miteinander zu verbinden.

Die Hubachse 1 gemäß der Erfindung wird z.B. zum Heben und Senken und gegebenenfalls zum Transportieren von Lasten verwendet. Deshalb ist in Fig. 1 eine mit dem Abtrieb 5 des Getriebes 3 verbundene Einrichtung 8 veranschaulicht, die bspw. eine Einrichtung zur Aufnahme bzw. Beförderung einer Nutzlast, z.B. einen Greifer, Sauger, Elektromagneten oder eine sonstige, allgemein als Last 8 bezeichnete Einrichtung darstellt.

Das Getriebe 3 schafft eine in Fig. 1 nicht näher dargestellte untersetzende Antriebsverbindung und weist gegebenenfalls eine Wandlungsvorrichtung auf, um die eingangsseitige Drehbewegung in eine ausgangsseitige lineare Bewegung umzusetzen. Das Getriebe 3 ist nichtselbsthemmend, eine Übertragung der Bewegung ist sowohl von der Eingangswelle 4 zum Abtrieb 5 als auch umgekehrt möglich.

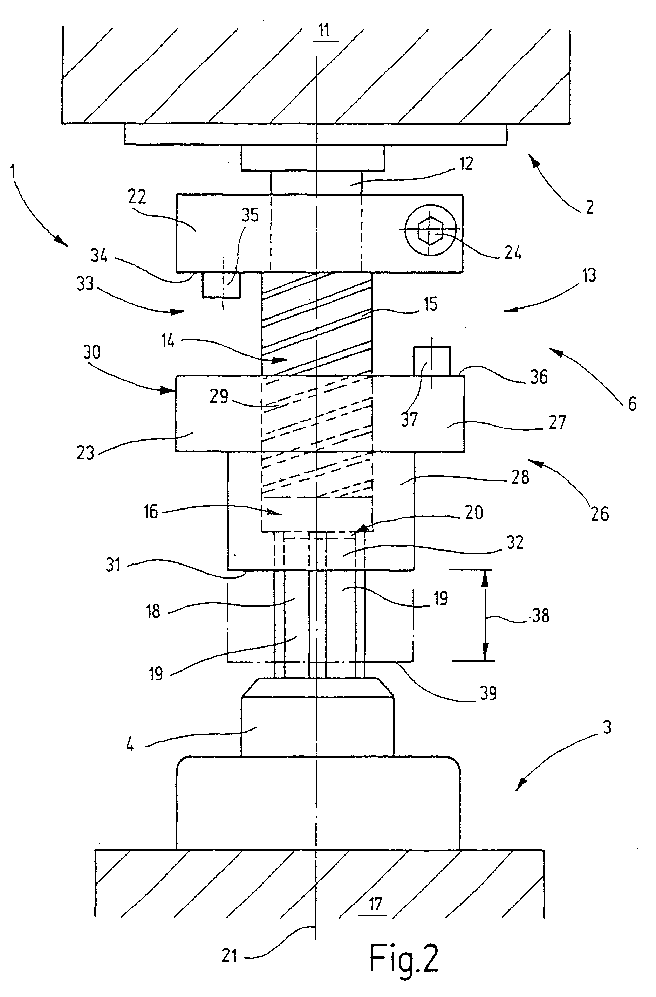

Wie aus Fig. 2, die ein erstes Ausführungsbeispiel einer erfindungsgemäßen Hubachse 1 zeigt, hervorgeht, enthält die Antriebs- und Bremseinrichtung 2 einen Motor 11, vorzugsweise einen Servomotor, der eine Antriebswelle 12 antreibt. Die Drehzahl des Motors 11 wird durch eine nicht näher veranschaulichte Steuereinrichtung mittels Steuersignale gesteuert bzw. geregelt.

Die von dem Motor 11 ausgehende Antriebswelle 12 ist zylindrisch und trägt ein Element 13 im Klemmsitz. Das Element 13 weist einen zu der Antriebswelle 12 koaxialen Fortsatz 14 auf, der ein Außengewinde 15 trägt. Das gem. Fig. 2 rechtsdrehende Außengewinde 15 ist im vorliegenden Beispiel nicht ganz bis zu dem freien Ende 16 des Fortsatzes 14 ausgebildet.

Von dem Getriebe 3 ist in Fig. 2 lediglich der Getriebeeingang 17 mit der Eingangswelle 4 dargestellt, die als Keilwelle 18 mit axial ausgerichteten Keilnuten 19 ausgebildet ist. Die Keilwelle 18 ragt mit ihrem freien Ende 20 aus dem Getriebe 3 in Richtung auf den Fortsatz 14 vor, ohne diesen zu berühren. Die Keilwelle 18 und der Fortsatz 14 fluchten miteinander und sind koaxial zu einer gemeinsamen Drehachse 21 angeordnet (Fig. 2).

Zur Verbindung der Keilwelle 18 mit der Antriebswelle 12 ist die schaltbare Kupplungseinrichtung 6 vorgesehen, die aus zwei Kupplungshälften 22, 23 besteht. Die erste Kupplungshälfte 22 ist etwa scheibenförmig und sitzt mit einer Öffnung auf der Antriebswelle 12. Eine Spannschraube 24 dient zur reibschlüssigen drehfesten und axial unverschiebbaren Sicherung auf der Antriebswelle 12.

Die zweite Kupplungshälfte 23 ist als Hülse 26 mit einem ersten Abschnitt 27 und einem koaxial zu diesem angeordneten zweiten Abschnitt 28 ausgebildet. Die Hülse 26 ist vorzugsweise einteilig ausgebildet.

Der erste Abschnitt 27 weist einen Innendurchmesser auf, der im Wesentlichen dem Außendurchmesser des Fortsatzes 14 entspricht. An der Innenseite des Abschnitts 27 ist ein zu dem Außengewinde 15 des Fortsatzes 14 korrespondierendes rechtsgängiges Innengewinde 29 vorgesehen, das gemeinsam mit dem Außengewinde 15 eine Betätigungseinrichtung 30 zum Schalten der Kupplungseinrichtung 6 bildet.

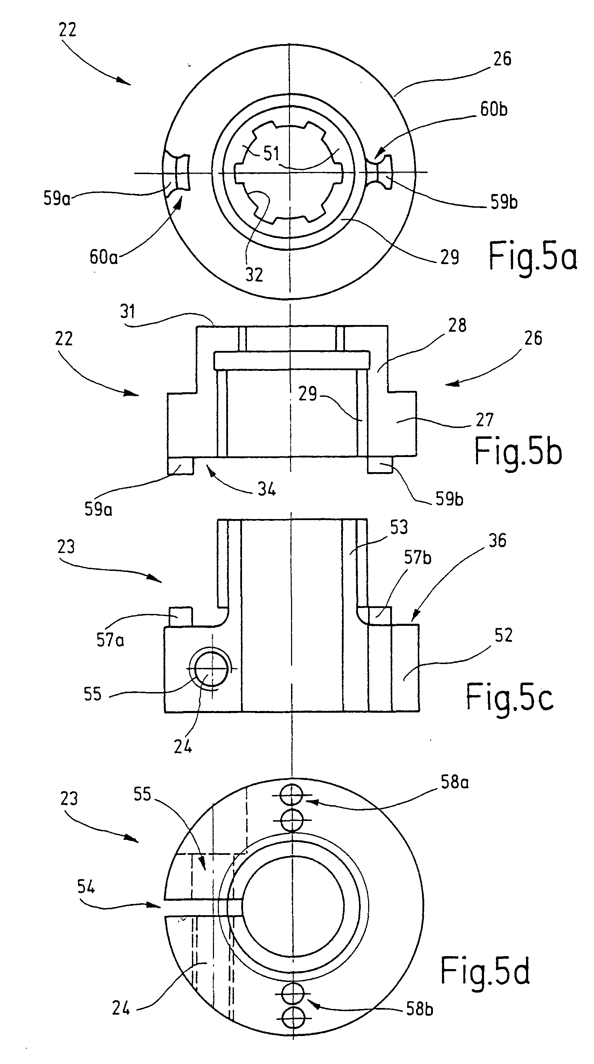

Das Innengewinde 29 kann auf die axiale Ausdehnung des ersten Abschnitts 27 beschränkt sein. An dem von dem ersten Abschnitt 27 abgelegenen Ende 31 des zweiten Abschnitts 28 ist der Innendurchmesser geringfügig verkleinert und eine Profilverzahnung 32 vorgesehen (Fig. 5a) die zu den Keilnuten 19 der Keilwelle 18 komplementär ist und mit diesen in Eingriff steht. Die Keilwelle 18 ist somit drehfest, jedoch axial verschiebbar mit der zweiten Kupplungshälfte 23 verbunden.

Zur formschlüssigen Verbindung ist die Kupplungseinrichtung 6 als Klauenkupplung 33 ausgebildet. Als Klauen sind an der von dem Motor 11 wegweisenden Stirnseite 34 der ersten Kupplungshälfte 22 ein Vorsprung 35 und an der der ersten Kupplungshälfte 22 zugewandten Stirnseite 36 der zweiten Kupplungshälfte 23 ein zugehöriger Vorsprung 37 vorgesehen. Die stiftförmigen Klauen oder Vorsprünge 35, 37 kommen über geeignet ausgestaltete, in Umfangsrichtung ausgerichtete Flächenbereiche miteinander in Anlage. Ein Reibschluss wird nicht erzeugt. Es könnten jedoch zusätzliche Rastmittel vorgesehen werden, um die formschlüssige Verbindung zu unterstützen.

Die Funktionsweise der in Fig. 2 dargestellten Hubachse 1 gemäß der Erfindung ist wie folgt:

In Betrieb stehen die Kupplungshälften 22, 23 in Eingriff. Die getriebeseitige Kupplungshälfte 23 ist gegen den Uhrzeigersinn gegen die Kupplungshälfte 22 gespannt. Die Klauen 35, 37 sind in Anlage. Die Hubachse ist kalibriert, d.h. die Positionssignale des Winkel- oder Drehgebers des Motors entsprechen Lastpositionen. Das Absolutweg-Messsystem des Motors (Winkel- oder Drehgeber) wird dazu benutzt, die vertikale Position einer zu bewegenden Last 8 zu kontrollieren.

Durch entsprechendes Ansteuern des Motors 11 wird die Last 8 mit der gewünschten Geschwindigkeit und Beschleunigung gehoben bzw. gesenkt. Die Antriebwelle 12 wird beim Heben der Last 8 im Uhrzeigersinn (aus der Sicht des Motors 11) und beim Senken in umgekehrter Richtung gedreht. Hierbei werden Drehmomente von dem Motor 11 über die Klauen 35, 37 auf die Getriebeeingangswelle 4 übertragen werden. Dem von dem Motor 11 aufgebrachten Drehmoment wirkt das von der Last 8 herrührende Gegenmoment entgegen, wodurch die Kupplungseinrichtung 6 stets in der Drehrichtung vorgespannt ist. Die Last 8 wirkt somit in Verbindung mit dem nichtselbsthemmenden Getriebe 3 als Vorspanneinrichtung für die Klauenkupplungshälften 22, 23, deren Klauen 35, 37 unabhängig von der Drehrichtung stets die gleiche Anlage haben. Die innere Reibung des Getriebes 3 ist derart gering ("nichtselbsthemmend"), dass eine an das Getriebe angeschlossene Einrichtung zur Aufnahme der Last 8 auch dann sicher nach unten fährt und die Getriebeeingangswelle 3 mitdreht, d.h. die Kupplung 6 in Eingriff hält, wenn keine Last vorhanden ist (Leerlauf, Leerlaufkraft). "Eingriff der Kupplung" bedeutet hier, dass die Klauen 35, 37 der Kupplung 6 miteinander in Anlage bleiben.

Setzt die Last 8 beim Senken bspw. auf ein Hindernis auf, bleibt das Gegenmoment abrupt aus und die Getriebeeingangswelle 4 sowie die zweite Kupplungshälfte 23 kommen zum Stillstand. Der Motor geht vom bremsenden Betrieb zunächst in seinen Antriebsbetrieb über, wird dann aber elektrisch sofort gestoppt. Durch seinen Schwung läuft er aber noch einige Umdrehungen nach. Durch die Weiterdrehung der mit seiner Antriebswelle 12 drehfest verbundenen ersten Kupplungshälfte 22 wird deren Klaue 35 sofort von der zugehörigen Klaue 37 abgehoben, wodurch die zweite Kupplungshälfte 23 durch die Betätigungseinrichtung 30 (Gewinde 15, 29) ausgerückt wird. Dies ist durch den Pfeil 38 und die Strichpunktlinie 39 angedeutet. Der Motor 11 wird somit automatisch von dem Getriebe 3 abgekuppelt. Die Ganghöhe der Gewinde 15, 29 ist vorzugsweise ausreichend gewählt, damit die beiden Kupplungshälften 22, 23 nach einem Differenzdrehwinkel von 360° nicht aneinander stoßen können. Dann stehen mehrere Umdrehungen als Drehspiel zur Verfügung und der Motor kann auslaufen.

Im Extremfall kann die zweite Kupplungshälfte 23 im Kollisionsfall vollständig von der Antriebswelle 12 getrennt werden, wenn das Gewinde 15, 29 außer Eingriff kommt. Vorzugsweise ist jedoch das durch die Länge des Außengewindes 15 vorgegebene maximale Drehspiel (in dem eine Winkeltreue zwischen Motor und Getriebe erhalten bleibt) groß genug, um den Motor 11 anhalten zu können, solange das Innengewinde 29 noch in das Außengewinde 15 greift. Dann kann die Kupplungseinrichtung 6 durch Umkehr der Drehrichtung wieder eingekuppelt werden, und es ist keine Neueinstellung des Absolutweg-Messsystems erforderlich, weil der beim Auskuppeln durchlaufene Differenzdrehwinkel beim Wiedereinkuppeln rückwärts durchlaufen wird.

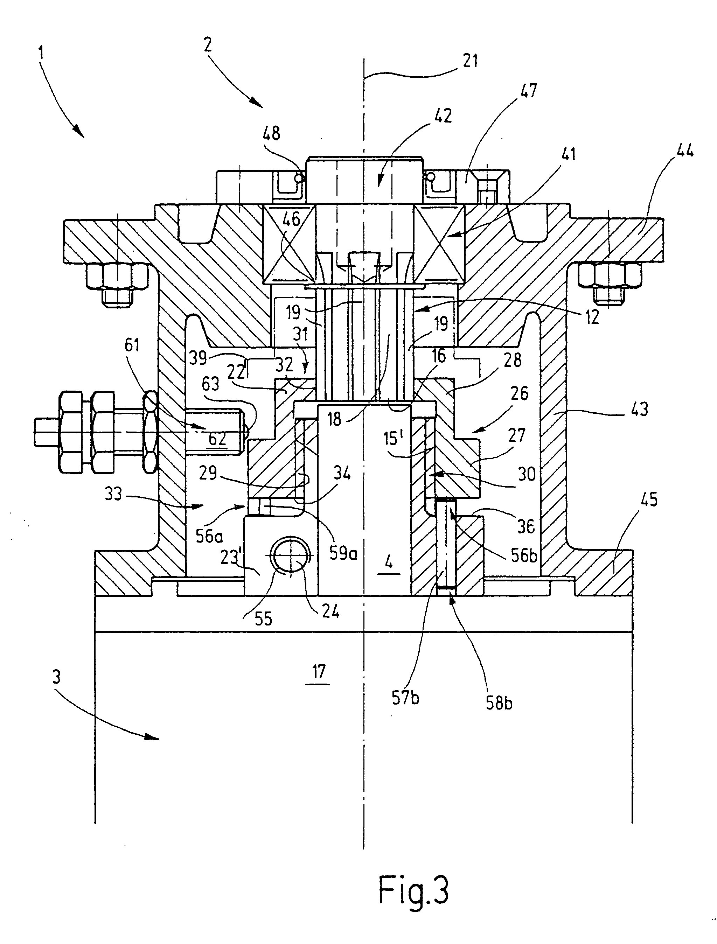

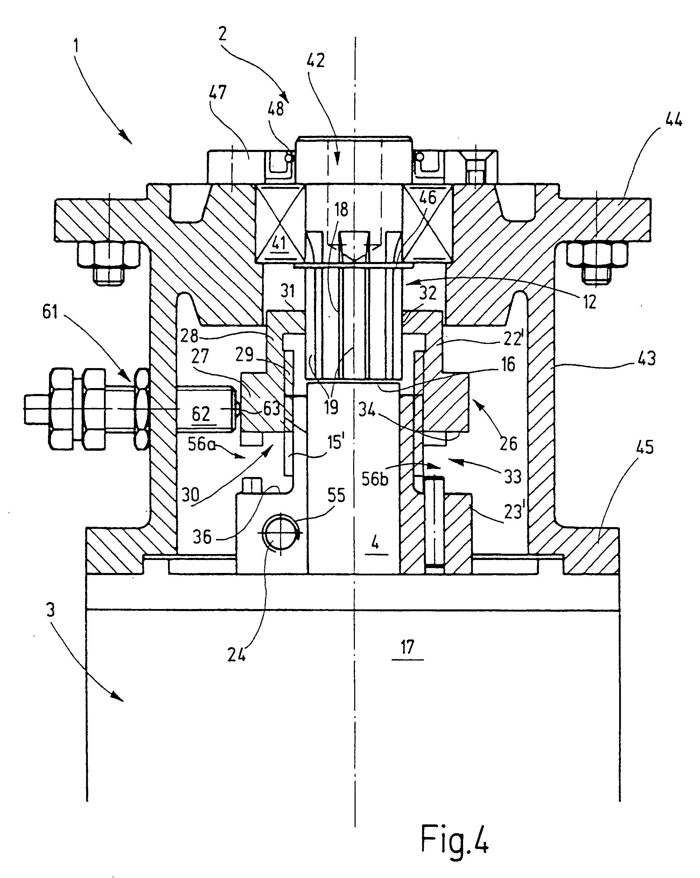

In Fig. 3 und 4 ist eine weitere bevorzugte Ausführungsform der erfindungsgemäßen Hubachse 1 veranschaulicht. Soweit Übereinstimmungen mit der vorstehend beschriebenen Hubachse in Bau und/oder Funktion bestehen, wird unter Zugrundelegung gleicher Bezugszeichen auf die vorstehende Beschreibung verwiesen.

Die in Fig. 3 und 4 dargestellte Ausführungsform der Hubachse 1 unterscheidet sich von der in Fig. 2 dargestellten insbesondere dadurch, dass hier anstelle der zweiten Kupplungshälfte 23' die erste Kupplungshälfte 22' ausgerückt wird. Die zweite Kupplungshälfte 23' sitzt verschiebefest auf der Eingangswelle 4 des nichtselbsthemmenden Getriebes 3, während die erste Kupplungshälfte 22' axial verschiebbar gekoppelt ist. Sie ist auf einer als Keilwelle 18 ausgebildeten Antriebswelle 12 angeordnet und geführt, die an einer Wälzlageranordnung 41 drehbar gelagert ist und an der eine Sackbohrung 42 bspw. für einen Ritzelantrieb vorgesehen ist. Die Hubachse 1 ist in radialer Richtung von einem zylindrisches Gehäuse 43 umgeben, an dessen Enden Flansche 44, 45 zur Verbindung mit dem Antrieb bzw. dem Getriebe 3 ausgebildet sind. In dem Gehäuse 43 ist die Wälzlageranordnung 41 festgelegt und durch einen Sicherungsring 46 und eine antriebsseitig an dem Gehäuse 43 angebrachte Abschlussscheibe 47 gesichert: Ein Dichtungsring 48 dichtet die Anordnung nach außen ab.

Die Kupplungseinrichtung 6 und die Betätigungseinrichtung 30 sind gegenüber der Ausführungsform nach Fig. 2 etwas modifiziert ausgestaltet. Die Kupplungshälften 22', 23' sind in Fig. 5a bis 5d gesondert und aus unterschiedlichen Ansichten dargestellt. Die Form der ersten Kupplungshälfte 22' (Fig. 5a, 5b) gleicht im Wesentlichen derjenigen der zweiten Kupplungshälfte 23 nach Fig. 2. Die in etwa topfförmige Kupplungshälfte 22' weist einen ersten Abschnitt 27 mit einem Innengewinde 29 sowie einen zweiten Abschnitt 28 mit eine Profilverzahnung 32 auf, die durch axial ausgerichtete Keile 51 gebildet ist. Diese sind in den Keilnuten 19 der Keilwelle 18 geführt.

Die verschiebefest angeordnete zweite Kupplungshälfte 23' (Fig. 5c,5d) weist ebenfalls zwei Abschnitte 52, 53 auf. Der im Wesentlichen der ersten Kupplungshälfte 22 nach Fig. 2 entsprechende Abschnitt 52 ist etwa zylindrisch mit Zentralbohrung und Radialschlitz 54 ausgebildet (Fig. 5d). Quer zu dem Radialschlitz 54 ist eine Gewindebohrung 55 für eine Spannschraube 24 zur Herstellung einer Klemmverbindung zwischen der Kupplungshälfte 22 bzw. 23' und der Welle 12 bzw. 4 vorgesehen.

Der Abschnitt 53 der zweiten Kupplungshälfte 23' ist ein hülsenförmiger Fortsatz des ersten Teils 52 mit geringerem Außendurchmesser und erstreckt sich von diesem weg zu dem Motor hin. Sein Außengewinde 15' bildet gemeinsam mit dem Innengewinde 29 der ersten Kupplungshälfte 22' die Betätigungseinrichtung 30 zum Schalten der Kupplungseinrichtung 6.

In Fig. 5a und 5d ist eine vorteilhafte Ausbildung der Klauenkupplung 33 veranschaulicht. Es sind zwei Klauenpaare 56a, 56b zur formschlüssigen Verbindung vorgesehen, wobei das erste Paar 56a in Umfangsrichtung um 180° von dem zweiten Paar 56b versetzt angeordnet ist. Auf diese Weise können Drehmomente über die beiden Paare 56a, 56b eingeleitet werden, ohne dass an dem Gewinde 15', 29 nennenswerte Radialkräfte entstehen. Das Gewinde 15', 29 ist somit schwimmend im Eingriff.

Die beiden Klauenpaare 56a, 56b sind im unterschiedlichen Abstand von der Drehachse 21 angeordnet, so dass bei einer Verdrehung um mehr als 180° einander nicht zugeordnete Klauen aneinander vorbei laufen und nicht miteinander kollidieren. Die Klauen der zweiten Kupplungshälfte 23' werden durch Zylinderstifte 57a, 57b gebildet, die in Bohrungen 58a, 58b gepresst sind und aus diesen etwas heraus ragen. Die Klauen der ersten Kupplungshälfte 22' sind als vorstehende Vorsprünge 59a, 59b ausgebildet, die in Umfangsrichtung ausgerichtete, geringfügig nach innen gewölbte muldenförmige Anlageflächen 60a, 60b zur Aufnahme der Stifte 57a, 57b aufweisen. Die Stifte 57a, 57b finden in die Mulden 60a, 60b und richten die Kupplungshälften 22', 23' unter Entlastung des Gewindes 15', 29 in Radialrichtung aus.

Die Hubachse 1 nach Fig. 3 bis 5 arbeitet wie die nach Fig. 2, mit der Ausnahme, dass im Kollisionsfall beide Klauenkupplungspaare 56a, 56b die Vorspannung verlieren und die erste Kupplungshälfte 22' ausgerückt wird. Durch das Weiterdrehen der Antriebswelle 12 schraubt sich die an der Keilwelle 18 axial geführte erste Kupplungshälfte 22' entlang des durch die Betätigungseinrichtung 30 festgelegten Drehspiels von der zweiten Kupplungshälfte 23' selbsttätig ab. Der Betriebszustand mit in Drehrichtung vorgespannter Kupplungseinrichtung 6 ist in Fig. 3 und der mit abgekuppelter Kupplungseinrichtung 6 in Fig. 4 gezeigt.

Das Auskuppeln der Kupplungseinrichtung 6 wird durch eine an dem Gehäuse 43 angebrachte, im vorliegenden Fall mechanische Sensoreinrichtung 61 erfasst. Durch die axiale Verschiebung der ersten Kupplungshälfte 22' wird eine in einer Hülse 62 bewegbar angeordnete Tastkugel 63 der Sensoreinrichtung 61 nach innen bewegt was erfasst und zu einer Steuereinrichtung gemeldet wird. Diese schaltet die Antriebs- und Bremseinrichtung 2 umgehend ab. Die Sensoreinrichtung 61 kann auch ein optischer oder magnetischer Sensor sein. Z.B. kann die Anlage der Klauen über einen elektrischen Kontakt überwacht werden, wobei bei Abheben der Klauen ein Signalstrompfad unterbrochen wird.

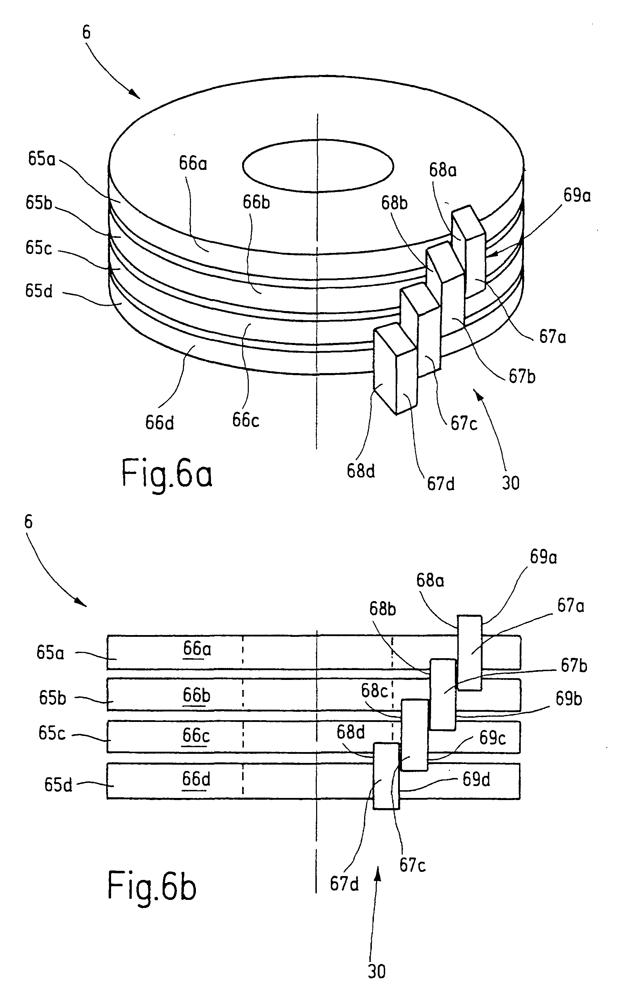

Eine Kupplungseinrichtung 6 mit einem beidseitig begrenzten Drehspiel ist in Fig. 6a in einer perspektivischen Darstellung und in Fig. 6b in einer Seitenansicht gezeigt. Sie besteht aus mehreren, im vorliegenden Beispiel vier Kupplungsscheiben 65a bis 65d, die jeweils Drehspiel gegeneinander haben, wobei bspw. die Kupplungsscheibe 65a mit der Antriebswelle 12 und die Kupplungsscheibe 65d mit der Getriebeeingangswelle 4 drehfest verbunden ist. Die dazwischen liegenden Scheiben 65b, 65c sind an einer der beiden Wellen 12 bzw. 4 drehbar gelagert. An den radialen Außenseiten 66a bis 66d der Kupplungsscheiben 65a bis 65d sind radiale Vorsprünge 67a bis 67d ausgebildet, die in Uhrzeigerrichtung weisende Anlageflächen 68a bis 68d sowie gegen die Uhrzeigerrichtung zeigende Anlageflächen 69a bis 69d aufweisen. Die Höhe der Vorsprünge 67a bis 67d ist größer als die Höhe der Kupplungsscheiben 65a bis 65d.

Im Betrieb ist die Kupplungseinrichtung 6 durch die Last 8 in dem in der Zeichnung gezeigten Sinne vorgespannt, so dass die Anlagefläche 68a der Kupplungsscheibe 65a mit der Anlagefläche 69b der Kupplungsscheibe 65b, die Anlagefläche 68b der Kupplungsscheibe 65b mit der Anlagefläche 69c der Kupplungsscheibe 65c u.s.w. in Eingriff steht. Bei einer Kollision wird zunächst die Kupplungsscheibe 65a im Gegenuhrzeigersinn weiter gedreht, während die anderen Scheiben 65b bis 65d zum Stehen kommen. Nach Durchlaufen eines Differenzwinkels von annähernd 360° kommt die Anlagefläche 69a des Vorsprungs 67a mit der Anlagefläche 68b des Vorsprungs 67b in Eingriff und nimmt diesen mit. Auf diese Weise wird nach jeweils etwa einer Umdrehung die nächste Scheibe mitgenommen. Dies ergibt ein maximales, in beide Drehrichtungen begrenztes Drehspiel von fast vier Umdrehungen. Innerhalb dieser Zeit sollte die Antriebs- und Bremseinrichtung 2 abgeschaltet werden.

Eine zum Heben und Senken von Lasten vorgesehene Hubeinrichtung 1 weist eine momentgeschaltete Kupplungseinrichtung 6 auf, die eine steuerbare Antriebs- und Bremseinrichtung 2 mit einem nichtselbsthemmenden Getriebe 3 verbindet. Die Kupplungseinrichtung 6 ist in der Drehrichtung durch eine Vorspanneinrichtung 8 vorgespannt, die beim Aufsetzen der Last auf ein Hindernis während des Absenkens automatisch die Vorspannung unterbricht. Ein an der Kupplungseinrichtung 6 vorgesehenes Drehspiel bewirkt bei einer derartigen Kollision ein sofortiges selbsttätiges Auskuppeln der Kupplungseinrichtung 6. Die Antriebs- und Bremseinrichtung 2 kann dann von dem Getriebe 3 abgetrennt und vor Überlastung geschützt werden. Nach Beseitigung der Kollision wird allein durch das Ansteuern der Antriebs- und Bremseinrichtung 2 ein selbsttätiges Wiedereinkuppeln und automatisches Vorspannen der Kupplungseinrichtung 6 bewirkt.

## Patentansprüche

1. Hubeinrichtung (1), insbesondere für Vorrichtungen zur automatischen Entnahme und/oder Beförderung von Lasten,
mit einer Antriebs- und Bremseinrichtung (2), die durch entsprechende Steuersignale steuerbar und zum Anhalten mit Bremssignalen beaufschlagbar ist, wobei sie einen Anhalteweg durchläuft,
mit einem Getriebe (3), das eine Eingangswelle (4), einen Abtrieb (5) und eine zwischen diesen vorhandene untersetzende Antriebsverbindung aufweist,
mit einer im Antriebsstrang angeordneten Kupplungseinrichtung (6), die ein Drehspiel aufweist, das größer ist als der Anhalteweg, und
mit einer Vorspanneinrichtung (8), die dazu eingerichtet ist, die Kupplungseinrichtung (6) in einer vorgegeben Drehrichtung vorzuspannen.

2. Hubeinrichtung nach Anspruch 1, **dadurch gekennzeichnet, dass** das Getriebe (3) ein nichtselbsthemmendes Getriebe ist, bei dem eine Drehmomentbeaufschlagung der Abtriebswelle mit einer Leerlaufkraft eine Drehung der Getriebeeingangswelle sicher bewirkt.

3. Hubeinrichtung nach Anspruch 1, **dadurch gekennzeichnet, dass** das Drehspiel mehr als 180°, vorzugsweise mehr als 360° beträgt, wobei das Drehspiel mehrere, vorzugsweise wenigstens drei oder vier Umdrehungen umfasst.

4. Hubeinrichtung nach Anspruch 1, **dadurch gekennzeichnet, dass** das Drehspiel in beiden Drehrichtungen begrenzt ist.

5. Hubeinrichtung nach Anspruch 1, **dadurch gekennzeichnet, dass** das Drehspiel lediglich in einer Drehrichtung begrenzt ist.

6. Hubeinrichtung nach Anspruch 2, **dadurch gekennzeichnet, dass** die Vorspanneinrichtung (8) durch eine auf die Ausgangswelle des nichtselbsthemmenden Getriebes (3) einwirkende Last gebildet ist.

7. Hubeinrichtung nach Anspruch 1, **dadurch gekennzeichnet, dass** die Kupplungseinrichtung (6) die Eingangswelle (4) des Getriebes (3) mit der Antriebs- und Bremseinrichtung (2) antriebsmäßig verbindet.

8. Hubeinrichtung nach Anspruch 1, **dadurch gekennzeichnet, dass** die Kupplungseinrichtung (6) eine mit einer Antriebswelle (12) drehfest verbundene erste Kupplungshälfte (22, 22'), eine zweite Kupplungshälfte (23, 23'), die mit der Eingangswelle (4) des Getriebes (3) in Drehverbindung steht, und eine Betätigungseinrichtung (30) aufweist, die zur Ein- und Auskupplung wenigstens einer der Kupplungshälften (22, 23; 22', 23') eingerichtet ist.

9. Hubeinrichtung nach Anspruch 8, **dadurch gekennzeichnet, dass** die erste und zweite Kupplungshälfte (22, 23; 22', 23') als Klauenkupplungshälften ausgebildet sind, die eine Klauenkupplung (33) bilden.

10. Hubeinrichtung nach Anspruch 9, **dadurch gekennzeichnet, dass** die Klauenkupplung (33) durch wenigstens einen aus einer der Kupplungshälften (22, 23; 22', 23') in Richtung auf die andere Kupplungshälfte (22, 23; 22', 23') ragenden Stift oder Vorsprung (37, 57a, 57b) sowie wenigstens eine zugehörige Klaue oder einen Vorsprung (35, 59a, 59b) gebildet ist, die auf der anderen Kupplungshälfte (22, 23; 22', 23') vorgesehen ist.

11. Hubeinrichtung nach Anspruch 9, **dadurch gekennzeichnet, dass** die erste Kupplungshälfte (22, 22') einen ersten Vorsprung (35, 57a, 57b) und die zweite Kupplungshälfte (23, 23') einen zugehörigen zweiten Vorsprung (37, 59a, 59b) aufweist, die in einem ersten Abstand von der Drehachse (21) angeordnet sind und ein Paar (56a, 56b) der Klauenkupplung (33) bilden, und dass ein weiteres Paar (56a, 56b) von Vorsprüngen (57a, 59a; 57b, 59b) vorgesehen ist, das in Umfangsrichtung um 180° von dem ersten Paar (56a, 56b) beabstandet und in einem anderen Abstand von der Drehachse (21) angeordnet ist.

12. Hubeinrichtung nach Anspruch 10 oder 11, **dadurch gekennzeichnet, dass** auf dem Stift (35, 57a, 57b) sowie der zugehörigen Klaue (37, 59a, 59b) definierte Anlageflächen (60a, 60b) ausgebildet sind.

13. Hubeinrichtung nach wenigstens einem der Ansprüche 8 bis 12, **dadurch gekennzeichnet, dass** eine der Kupplungshälften (22, 23; 22', 23') axial unverschiebbar auf einer Welle (4, 12) angeordnet ist, während die andere Kupplungshälfte (22, 23; 22', 23') drehfest und axial verschiebbar mit der ihr zugeordneten Welle (4, 12) verbunden ist.

14. Hubeinrichtung nach Anspruch 8, **dadurch gekennzeichnet, dass** die Betätigungseinrichtung (30) derart ausgebildet ist, dass sie die Kupplungseinrichtung (6) bei Drehmomentumkehr auskuppelt.

15. Hubeinrichtung nach Anspruch 8, **dadurch gekennzeichnet, dass** die Betätigungseinrichtung (30) den relativen Drehwinkel zwischen den Kupplungshälften (22, 23; 22', 23') beim Auskuppeln erfasst und beim Wiedereinkuppeln wieder vorgibt.

16. Hubeinrichtung nach Anspruch 8, **dadurch gekennzeichnet, dass** die Betätigungseinrichtung (30) als ein Gewinde (15, 15', 29) oder eine Kurve ausgebildet ist.

17. Hubeinrichtung nach Anspruch 12 und 16, **dadurch gekennzeichnet, dass** die Ganghöhe des Gewindes (15, 15', 29) bzw. der Kurve wenigstens in dem beim Auskuppeln zunächst wirksamen Abschnitt größer ist als die axiale Ausdehnung der Anlageflächen der Klauenkupplungshälften (22, 23; 22', 23').

18. Hubeinrichtung nach Anspruch 8, **dadurch gekennzeichnet, dass** die Betätigungseinrichtung (30) durch eine Hintereinanderanordnung von mehreren formschlüssigen kupplungsbehafteten Kupplungsscheiben (65a, 65b, 65c, 65d) gebildet ist.

19. Hubeinrichtung nach Anspruch 8, **dadurch gekennzeichnet, dass** eine Sensoreinrichtung (61) vorgesehen ist, die eine Trennung der formschlüssigen Verbindung zwischen den Klauenkupplungshälften (22, 23; 22', 23') erfasst und Steuersignale liefert, um ein Abschalten der Antriebs- und Bremseinrichtung (2) zu bewirken.

## Claims

1. Lifting device (1), in particular for devices for the automatic removal and/or transport of loads,
with a driving and braking means (2), which is controllable by corresponding control signals and may be subjected to braking signals for stopping, wherein it passes through a stopping path,
with a gear (3), which has an input shaft (4), an output (5) and a reducing drive connection provided between these,
with a coupling means (6) arranged in the drive train and having a rotation clearance, which is greater than the stopping path, and
with a prestressing means (8), which is fitted for prestressing the coupling means (6) in a predetermined direction of rotation.

2. Lifting device according to Claim 1, **characterised in that** the gear (3) is a non-selflocking gear, wherein an application of torque to the output shaft with a no-load force securely effects a rotation of the gear input shaft.

3. Lifting device according to Claim 1, **characterised in that** the rotation clearance amounts to more than 180°, preferably more than 360°, wherein the rotation clearance comprises several, preferably at least three or four, revolutions.

4. Lifting device according to Claim 1, **characterised in that** the rotation clearance is restricted in both directions of rotation.

5. Lifting device according to Claim 1, **characterised in that** the rotation clearance is restricted merely in one direction of rotation.

6. Lifting device according to Claim 2, **characterised in that** the prestressing means (8) is formed by a load acting on the output shaft of the non-selflocking gear (3).

7. Lifting device according to Claim 1, **characterised in that** the coupling means (6) forms a drive connection between the input shaft (4) of the gear (3) and the driving and braking means (2).

8. Lifting device according to Claim 1, **characterised in that** the coupling means (6) has a first coupling half (22, 22') connected against rotation to a drive shaft (12), a second coupling half (23, 23'), which stands in rotational connection with the input shaft (4) of the gear (3), and an operating means (30), which is fitted for coupling and decoupling at least one of the coupling halves (22, 23; 22', 23').

9. Lifting device according to Claim 8, **characterised in that** the first and second coupling halves (22, 23; 22', 23') are configured as claw coupling halves forming a claw coupling (33).

10. Lifting device according to Claim 9, **characterised in that** the claw coupling (33) is formed by at least one pin or projections (37, 57a, 57b) projecting out of one of the coupling halves (22, 23; 22', 23') towards the other coupling half (22, 23; 22', 23') and also at least one associated claw or a projection (35, 59a, 59b), which is provided on the other coupling half (22, 23; 22', 23').

11. Lifting device according to Claim 9, **characterised in that** the first coupling half (22, 22') has a first projection (35, 57a, 57b) and the second coupling half (23, 23') has an associated second projection (37, 59a, 59b), which are arranged at a first distance from the rotational axis (21) and form a pair (56a, 56b) of the claw coupling (33), and that a further pair (56a, 56b) of projections (57a, 59a; 57b, 59b) is provided, which is spaced 180° from the first pair (56a, 56b) in peripheral direction and is arranged at a different distance from the rotational axis (21).

12. Lifting device according to Claim 10 or 11, **characterised in that** defined abutment faces (60a, 60b) are configured on the pin (35, 57a, 57b) and also on the associated claw (37, 59a, 59b).

13. Lifting device according to at least one of Claims 8 to 12, **characterised in that** one of the coupling halves (22, 23; 22', 23') is arranged to be axially non-displaceable on a shaft (4, 12), while the other coupling half (22, 23; 22', 23') is connected against rotation and axially non-displaceably to the shaft (4, 12) associated with it.

14. Lifting device according to Claim 8, **characterised in that** the operating means (30) is configured such that it decouples the coupling means (6) in the case of torque reversal.

15. Lifting device according to Claim 8, **characterised in that** the operating means (30) detects the relative angle of rotation between the coupling halves (22, 23; 22', 23') on decoupling and predetermines this again on re-coupling.

16. Lifting device according to Claim 8, **characterised in that** the operating means (30) is configured as a thread (15, 15', 29) or a cam.

17. Lifting device according to Claim 12 and 16, **characterised in that** the pitch of the thread (15, 15', 29) or the cam, at least in the section firstly active during decoupling, is greater than the axial extension of the abutment faces of the claw coupling halves (22, 23; 22', 23').

18. Lifting device according to Claim 8, **characterised in that** the operating means (30) is formed by an arrangement, wherein several positive coupling discs (65a, 65b, 65c, 65d) fitted with couplings are arranged one behind the other.

19. Lifting device according to Claim 8, **characterised in that** a sensor means (61) is provided, which detects a separation of the positive connection between the claw coupling halves (22, 23; 22', 23') and delivers control signals to cause the driving and braking means (2) to be switched off.

## Revendications

1. Appareil de levage (1) destiné notamment à des dispositifs de prélèvement et/ou de transport automatique de charges, comprenant
un moyen d'entraînement et de freinage (2) qui peut être piloté par des signaux de commande correspondants et recevoir des signaux de freinage à des fins d'arrêt et parcourt alors une distance d'arrêt,
un mécanisme de transmission (3) qui présente un arbre moteur (4), un arbre mené (5) et une liaison d'entraînement de démultiplication, prévue entre les deux arbres,
un moyen d'accouplement (6) qui est disposé dans la chaîne de transmission et présente un jeu en rotation qui est supérieur à la distance d'arrêt, et
un moyen de précontrainte (8) qui est conçu pour mettre sous précontrainte le moyen d'accouplement (6), dans un sens de rotation prédéterminé.

2. Appareil de levage selon la revendication 1, **caractérisé en ce que** le mécanisme de transmission (3) est un mécanisme sans effet d'auto-verrouillage, dans lequel l'application d'un couple à l'arbre mené avec une force de marche à vide provoque de manière sûre une rotation de l'arbre moteur du mécanisme de transmission.

3. Appareil de levage selon la revendication 1, **caractérisé en ce que** le jeu en rotation est supérieur à 180°, de préférence supérieur à 360°, et couvre plusieurs rotations, de préférence au moins trois ou quatre rotations.

4. Appareil de levage selon la revendication 1, **caractérisé en ce que** le jeu en rotation est limité dans les deux sens de rotation.

5. Appareil de levage selon la revendication 1, **caractérisé en ce que** le jeu en rotation est limité seulement dans un sens de rotation.

6. Appareil de levage selon la revendication 2, **caractérisé en ce que** le moyen de précontrainte (8) est constitué par une charge agissant sur l'arbre mené du mécanisme de transmission (3) sans effet d'auto-verrouillage.

7. Appareil de levage selon la revendication 1, **caractérisé en ce que** le moyen d'accouplement (6) relie sur le plan de l'entraînement l'arbre moteur (4) du mécanisme de transmission (3) au moyen d'entraînement et de freinage (2).

8. Appareil de levage selon la revendication 1, **caractérisé en ce que** le moyen d'accouplement (6) comprend une première moitié d'accouplement (22, 22') liée de manière solidaire en rotation à un arbre d'entraînement (12), une seconde moitié d'accouplement (23, 23'), liée en rotation à l'arbre moteur (4) du mécanisme de transmission (3), et un moyen d'actionnement (30) qui est conçu pour assurer l'accouplement et le désaccouplement d'au moins une des moitiés d'accouplement (22, 23; 22', 23').

9. Appareil de levage selon la revendication 8, **caractérisé en ce que** les première et deuxième moitiés d'accouplement (22, 23; 22', 23') sont conformées en moitiés d'accouplement à griffes qui constituent un moyen d'accouplement à griffes (33).

10. Appareil de levage selon la revendication 9, **caractérisé en ce que** l'accouplement à griffes (33) est constitué par au moins une tige ou saillie (37, 57a, 57b), s'étendant depuis l'une des moitiés d'accouplement (22, 23; 22', 23') en direction de l'autre moitié d'accouplement (22, 23; 22', 23'), ainsi que par au moins une griffe associée ou une saillie (35, 59a, 59b) qui est prévue sur l'autre moitié d'accouplement (22, 23; 22', 23').

11. Appareil de levage selon la revendication 9, **caractérisé en ce que** la première moitié d'accouplement (22, 22') présente une première saillie (35, 57a, 57b) et la seconde moitié d'accouplement (23, 23') présente une seconde saillie (37, 59a, 59b) associée, qui sont disposées à une première distance de l'axe de rotation (21) et forment une paire (56a, 56b) de l'accouplement à griffes (33), et **en ce qu'**il est prévu une deuxième paire (56a, 56b) de saillies (57a, 59a; 57b, 59b) qui est espacée de 180° de la première paire (56a, 56b) dans la direction périphérique et est disposée à une distance différente par rapport à l'axe de rotation (21).

12. Appareil de levage selon la revendication 10 ou 11, **caractérisé en ce que** des surfaces d'appui (60a, 60b) définies sont aménagées sur la tige (35, 57a, 57b) et sur la griffe (37, 59a, 59b) associée.

13. Appareil de levage selon au moins une des revendications 8 à 12, **caractérisé en ce que** l'une des moitiés d'accouplement (22, 23; 22', 23') est disposée sur un arbre (4, 12), s ans possibilité de déplacement axial, tandis que l'autre moitié d'accouplement (22, 23, 22', 23') est liée à l'arbre (4, 12) associé en étant solidaire en rotation et déplaçable dans la direction axiale.

14. Appareil de levage selon la revendication 8, **caractérisé en ce que** le moyen d'actionnement (30) est agencé de manière telle qu'il sépare le moyen d'accouplement (6) en cas d'inversion du couple.

15. Appareil de levage selon la revendication 8, **caractérisé en ce que** le moyen d'actionnement (30) mesure l'angle de rotation relatif entre les moitiés d'accouplement (22, 23; 22', 23') lors du désaccouplement et l'impose de nouveau lors du nouvel accouplement.

16. Appareil de levage selon la revendication 8, **caractérisé en ce que** le moyen d'actionnement (30) est conformé en filet (15, 15', 29) ou en came.

17. Appareil de levage selon les revendications 12 et 16, **caractérisé en ce que** le pas du filet (15, 15', 29) ou de la came est plus grand, au moins dans la partie qui agit en premier lors du désaccouplement, que la dimension axiale des surfaces d'appui des moitiés d'accouplement (22, 23; 22', 23').

18. Appareil de levage selon la revendication 8, **caractérisé en ce que** le moyen d'actionnement (30) est constitué par une disposition successive de plusieurs disques d'accouplement (65a, 65b, 65c, 65d) assemblés par complémentarité de formes.

19. Appareil de levage selon la revendication 8, **caractérisé en ce qu'**il est prévu un moyen de détection (61) qui détecte la séparation de la liaison par complémentarité de formes entre les moitiés d'accouplement à griffes (22, 23; 22', 23') et délivre des signaux de commande pour déclencher l'arrêt du moyen d'entraînement et de freinage (2).
